# EUROPEAN PATENT APPLICATION

(11) **EP 4 438 648 A1**
(43) Date of publication of application: **02.10.2024**
(21) Application number: 23165843.6
(22) Date of filing: 31.03.2023
(51) Int. Cl.: C08G 18/12, C08G 18/32, C08G 18/38, C08G 18/44, C08G 18/48, C08G 18/75, C09D 175/00

(54) **ROOM TEMPERATURE SELF HEALABLE WATERBORNE POLY(THIOURETHANE-URETHANE) UREA DISPERSION FOR COATING APPLICATIONS**

(71) Applicant: CHT Turkey Kimya Sanayi ve Ticaret A.S., Istanbul (TR)
(72) Inventor: AKANSEL, Yagmur, ISTANBUL (TR); SENADA, Seher, Istanbul (TR); AKBULUT, Hüseyin, Istanbul (TR); KAYA, Eyüp, Istanbul (TR); DOGAN, Canan, Istanbul (TR)
(74) Representative: Yavuzcan, Alev

(57) **Abstract**

The present invention is directed to a waterborne self-healing poly(thiourethane-urethane) urea dispersion, (PTU-PU-Urea), that can repair cuts and scratches without the need for external stimuli. The self-healing ability of the PTU-PU-Urea dispersion is attributed to the supramolecular hydrogen bonds between urea and urethane linkages, dynamic thiourethane bonds, and the microphase separation between the hard and soft segments of the poly(thiourethane-urethane) urea structure. The dispersion can be produced by reacting a hydroxyl and thiol functional chain extension agent with isocyanate and reversible hydrogen bonding interactions between the urea and urethane groups. The mechanical properties of the dispersion can be adjusted by varying the ratio of polyols in the mixture, and the dispersion can heal from the same location repeatedly. The cured film of the PTU-PU-Urea dispersion was found to restore mechanical properties and heal cuts within 3 hours at room temperature. Furthermore, the PTU-PU-Urea dispersion can be applied to various surfaces such as metal, wood, textile fabrics and plastics, proving its versatility. The present invention provides a new and innovative approach to producing self-healing coatings that have potential applications in various industries.

## Description

### FIELD OF INVENTION

The present invention pertains to the field of polymer chemistry and material science. More specifically, it relates to a waterborne poly(thiourethane-urethane) urea dispersion, (PTU-PU-Urea), that exhibits self-healing properties at room temperature. The invention involves introducing at least two healing moieties in the PTU-PU-Urea polymer by reacting a hydroxyl and thiol functional chain extension agent with isocyanate and reversible hydrogen bonding interactions between the urea and urethane groups. Additionally, the invention includes a method for producing self-healing PTU-PU-Urea dispersion using at least two different aliphatic polyols with different molecular weights and structures and creating a microphase separation formed with alternating the hard and soft segments of the PTU-PU-Urea dispersion. The invention further includes the use of the PTU-PU-Urea dispersion as a coating for textile fabrics, which exhibits self-healing ability when scratched. Additionally, the said coating is applied to many other surfaces such as metal, wood and plastic and exhibited self-healing ability. The present invention offers a new and innovative approach to producing self-healing coatings that can repair cuts and scratches without the need for external stimuli.

### BACKGROUND OF THE INVENTION

Polymeric materials with the ability to self-heal have gained increasing attention in recent years due to their potential applications in various fields. Self-healing polymers have the unique ability to repair themselves after sustaining damage, thereby increasing the longevity and durability of the material. Especially, polyurethanes are multipurpose and versatile materials that attract a great interest from a wide range of industry fields such as; coating, adhesives and binders, sealants, building insulation, automobile industry, footwear, aerospace, packaging, healthcare, electronic fields etc. Water-based polyurethane coatings are gaining a considerable attention opposed to conventional products of polyurethanes that are produced with organic solvents due to the concerns about volatile organic solvents (VOCs).

However, there is a need to improve the structural integrity of the polyurethane, increase the lifespan and restore the ability to resist physical failures from thermal, chemical and mechanical stresses. Thus, self-healing coatings are gaining considerable attention from all the industry fields. An ideal self-healing coating has the ability to repair itself to the original state in occurrence of a damage such as; scratching, tearing, fracturing or breaking.

Self-healing coating can be applicable to many industry fields, the use of it for textile industry is a fairly new approach. It is known that textile fabrics are open to many damages such as; scratches, cuts and abrasion and to increase the sustainability, self-healing coatings gain great importance.

Several methods and mechanisms have been proposed to prepare such a coating for different applications with different levels of favorable results. It has been known that the strategies used to achieve such a coating can be split up into two main principles; extrinsic self-healing and intrinsic self-healing. Among the methods employed for extrinsic self-healing, microencapsulation to embed the material with healing agents such as reactive monomers is arguably the most commonly used method. However, extrinsic self-healing method has some limitations regarding the location of the damage since, when the healing agent is used, it is not possible to heal the same location again. Also, producing the capsules with accurate amount of healing agent is extremely challenging; further, the number of capsules can decrease the mechanical properties of the product.

A polyurethane system can be intrinsic self-healing which is achieved mainly with the formation of reversible covalent bonds. Intrinsic self-healing polyurethanes does not require any external agents and have the ability to heal the damage occurred in the structure multiple times in the same region. Intrinsic self-healing ability is imparted to the polyurethane structure with, physical interactions and/or introduction of reversible covalent bonds. After the occurrence of the damage to the structure, the reassociation may be triggered by some external triggers such as; heat, moisture, light and pH change.

Physical interactions mainly depend on the non-covalent supramolecular interactions such as; strong or weak hydrogen bonds, metal-ligand complexation, π-π stacking, ionic interactions, electrostatic interactions and host guest interactions. Particularly hydrogen bonds are crucial for this invention, although, when the polyurethanes are considered the hydrogen bonding term is vague since the hydrogen bonds are present in the physical network from the urethane bonds. Imparting the water-based polyurethane with self-healing ability is achievable without any external healing agents, depending on the strength of the hydrogen bonds between urethane linkages and urea groups.

The second method to emphasize for this invention is the introduction of reversible covalent bonds to the structure of the waterborne polyurethane. To fabricate the reversible dynamic bonds which more often than not offers higher mechanical strength compared to the non-covalent bonds, the approaches; Diels-Alder reactions between furan and maleimide, transesterification, disulfide metathesis, radical reshuffling, thiol-disulfide exchange, thiourethane bond exchange, reversible acylhydrazones and photocycloaddition are predominantly employed. Among the methods, imparting thioruethane bonds to the structure was of particular interest for this invention.

Using thiourethane chemistry to achieve self-healing PTU-PU is a fairly new approach. Thiourethanes which are the reaction product of isocyanates and thiols are said to be a new potential alternative to the polyurethanes with exhibiting attributions such as re-processibility and recyclability, providing similar character of hydrogen bonding compared to urethane, demonstrating a dual nature of the mechanism, being able to both dissociate and associate which is important for self-healing ability.

EP 3 103 846 B1 (SELF-HEALING POLYURETHANE POLYMERS) describes a polyurethane, prepared with a polycarbonate diol and a polyester diol exhibiting spontaneous self-healing behavior at room temperature without a sequestered healing agent and without applying pressure, both in air and immersed in fluids. Furthermore, the invention states that there is no self-healing of the polyurethane prepared with polycaprolactone or polyester as the polyol but self- healing is observed in all polyurethane prepared with a mixture containing polycarbonate diol. Due to the high polarity of the carbonate group as compared to ester or lactone groups, self-healing ability is attained from the hydrogen bonding between the urethane and carbonate bonds.

WO2010128007A1 (Self-healing polymers) discloses a self-healing polymer that uses at least two disulfide groups in the polymer structure to ensure that healing takes place in the entire polymer, multiple times at room temperature. The invention states that the self-healing is achieved with the disulfide exchange reaction and the interchange reaction is reversible.

Document CN114292378A (Intrinsic self-healing polyurethane elastic material and preparation method thereof) describes a preparation method to achieve an intrinsic self-healing polyurethane elastic material. The polyurethane structure is designed that the self-healing ability is based on the supramolecular effects mainly hydrogen bonds.

CN115197394A describes a bio-based waterborne polyurethane polymer with self-healing abilities and the preparation of it. The invention states that the self-healing ability is based on the reversible thiourethane bonds that can undergo dissociation and recombination. Thiourethane bonds are introduced to the system by the reaction of a dimercapto monomer with a diisocyanate and the healing is said to be achieved after 30 minutes at 45°C.

Document US20170008999A1 relates to a crosslinked polymer having self-healing ability without the need to be exposed to any external stimuli such as; light, pressure or pH change, by having H-bonding interactions between the urea groups and being able to undergo aromatic disulfide metathesis.

In document KR101906033B1 a scratch resistant self-healing coating for textile is disclosed, which is based on the supramolecular effects. The said supramolecular crosslinked material exhibits self-healing ability multiple times at the same location by applying heat. The cross-linking of the supramolecules is carried out by hydrogen bonding with introducing the system with hydrogen bondable monomers such as DeAp (deazapterin), UG (uredoguanosion), adenine, cytosine, thymine, guanine and UPy (ureidopyrimidinone).

While many self-healing polymers have been developed, there is still a need for room temperature self-healable, recyclable, waterborne polymeric coatings that are easy to produce, can heal multiple times from the same location, and suitable for scale-up. In particular, there is a need for such coatings that are applicable to the textile industry, where durable and long-lasting coatings can increase the sustainability of textile products.

The present invention addresses these needs by providing a novel self-healing poly(thiourethane-urethane) urea dispersion that utilizes a thiol and hydroxyl functional chain extension agent. The ratio of polyols in the mixture can be adjusted to produce coatings with different mechanical properties, making it versatile and highly practical.

Furthermore, the present invention provides a unique approach to producing such a coating, with the healing process depending on the supramolecular hydrogen bonds between urea and urethane linkages, dynamic thiourethane bonds, and the microphase separation between the hard and soft segments of the poly(thiourethane-urethane) urea structure. Thiourethane bonds possessing lower bond dissociation energy not only endows the polymer with self-healing ability but also makes it easier to be recycled and reprocessed.

Overall, the present invention provides a unique and innovative solution for creating a self-healing poly(thiourethane-urethane) urea dispersion that is suitable for use in the textile industry and beyond.

### DETAILED DESCRIPTION OF THE INVENTION

The present invention provides a novel approach to produce a waterborne poly(thiourethane-urethane) urea dispersion that exhibits room temperature self-healing ability. The coating is particularly suitable for the textile industry, but also has potential applications for various other surfaces such as metal, wood, and plastic. Surprisingly, the self-healing process occurs without the need for any external stimuli, such as light, heat, pH change, or electricity.

The self-healing ability is achieved through a combination of mechanisms, including; the incorporation of dynamic thiourethane bonds via the reaction of a hydroxyl and thiol functional chain extension agent with isocyanate, hydrogen bonds between the urea and urethane linkages, and the synergetic effects of combining thiourethane, urethane, and urea bonds in a single batch preparation. Additionally, the coating undergoes microphase separation as a result of using at least two different aliphatic polyols with different molecular weights and structures, which alternate the hard and soft segments of the PTU-PU-Urea dispersion.

The term "self-healing coating" used herein to describe a coating having the ability to return to its original form after having been inflicted with some kind of damage such as a cut, scratch or tear. The term "polyurethane" refers to a polymeric material mainly obtained by the exothermic polyaddition reaction of polyols and polyisocyanates. The group formed by the reaction of polyols and polyisocyanates is called urethane and it is the requisite bond of the polyurethane molecule.
1. The term "polyol" refers to a molecule that has at least two hydroxyl functionality and is able to react with isocyanate to create urethane bonds. According to an embodiment of the present invention choice of the polyol type, number of different polyols used in the mixture and ratio of different polyols used play a great role for the capability of self-healing. Specifically, polyols used herein were selected from mainly di-hydroxyl terminated, molecular weight in the range of 500 to 5000 Daltons; Polyethylene glycol (PEG), Polypropylene glycol (PPG), Polybutadiene glycol (PBD), Polycaprolactone polyol (PCL), Polycarbonate polyol, Polyester polyol (PE), Polyoxytetramethylene glycol (PTMG), Polyvinyl alcohol (PVA), PDMS based and natural oils such as castor oil, soybean oil, and sunflower oil based polyols.

The term "isocyanate" is well known in the art and it is the functional group with the formula R-N=C=O, for this invention diisocyanates which are organic compounds with two isocyanate groups are used and selected from; methylene diphenyl diisocyanate (MDI), toluene diisocyanate (TDI), hexamethylene diisocyanate (HDI), isophorone diisocyanate (IPDI), Meta-tetramethylxylene diisocyanate (TMXDI), 1,5-naphthalene diisocyanate (NDI) and hydrogenated MDI (H12MDI).

The term "thiourethane" herein is the product of the addition of thiols to isocyanates by thiol-click chemistry. A thiol or a thiol derivative is any organosulfur compound with -SH functional group and particularly, for this invention thiol derivatives with hydroxyl functionality can be chosen from; 3-Mercaptopropane-1,2-diol, dithioerythritol, 2,3-Dimercapto-1-propanol ,2-Mercaptoethanol, Cysteine, and thiol functional polyethylene glycols but not limited.

Polyurethane formulations utilize various types of chain extenders to extend polyurethane chains by reacting with isocyanate groups. Common chain extenders include diamines (e.g., ethylene diamine, 1,4-butanediamine, and 1,6-hexanediamine), hydroxyl-containing compounds (e.g., ethylene glycol, propylene glycol, 1,4-butanediol, glycerol), and amino alcohols (e.g., ethanolamine, N-methyl ethanolamine, N-ethyl ethanolamine). Other chain extenders that are commonly used include 1,6-hexanediol and trimethylolpropane (TMP). The choice of chain extender has a significant impact on the properties of the resulting polyurethane material, and selecting the appropriate chain extender is crucial in tailoring the material to meet specific application requirements.

The term "room temperature self-healing" denotes a healing between the temperatures 15 to 35° C, without needing any external stimuli.

The present invention provides a process for preparing a poly(thiourethane-urethane) urea dispersion that exhibits remarkable self-healing properties. The process comprises four distinct steps.

In the first step, a two-hydroxyl functional polyol with a molecular weight between 1500 to 3500 Dalton, an internal emulsifier, a suitable catalyst, and a diisocyanate functional polyisocyanate are reacted until the overall NCO/OH ratio between 2 to 2.7 is achieved. The preferred NCO/OH ratio for this step is 2.5.

After reaching the theoretical NCO value, the second step involves adding a second polyol with a different chemical structure and molecular weight between 1500 to 750, along with suitable chain extenders commercially used for polyurethane, and reacting the mixture further. The overall NCO/OH ratio for this stage is preferably between 1.7 to 1.9.

In the third step, the NCO terminated prepolymer is reacted with a hydroxyl and thiol functional chain extension agent to attain a NCO terminated prepolymer with thiourethane linkages. During this step, the chain extension agent has both thiol and hydroxyl functionality, leading to the growth of the chain with both thiourethane and urethane bonds. The overall NCO/OH ratio for this step is selected to be within the range of 1.5 to 1.4, with some remaining unreacted NCO groups.

Finally, in the last step, a neutralizing agent is added to the NCO terminated prepolymer, followed by the gradual addition of deionized water. The remaining unreacted NCO groups in the prepolymer react with water to form urea groups. The dispersion can be further chain extended with commercial post chain extenders, preferably with amine groups, which react with isocyanates to yield urea groups.

The resulting poly(thiourethane-urethane) urea dispersion produced by this process exhibits exceptional self-healing properties without requiring external stimuli, making it an excellent candidate for various coating applications, including textiles, metal, wood, and plastic surfaces.

The experimental examples section provides a detailed description of the preparation method for the poly(thiourethane-urethane) urea dispersion. One batch preparation method is preferred in the present invention to increase production efficiency and reduce production and maintenance costs. The coating produced according to the present invention can heal damages that occur in the structure without the need for external stimuli, such as heat or light. Unlike conventional coatings that rely on external stimuli mainly heat to initiate the self-healing process, the coating produced according to the present invention can heal cuts or scratches within minutes without the need for additional stimuli.

One of the aims of this invention is to impart different reversible bonds to the structure to increase the healing efficiency without compromising the mechanical properties. The hydroxyl and thiol functional chain extension agent provided the structure with both thiourethane and urethane bonds. Imparting thiourethane bonds to the structure is of great importance due to thiourethane bonds having lower dissociation energy and making the reconnection easy compared to urethane bonds.

The advantage of this invention is by changing the ratio of polyols in the mixture film properties can be adjusted to fit the requirements of different application areas. Products having different mechanical properties and their self-healing efficiencies are provided in the experimental part with stress-strain test results. Choosing one of the polyols in the mixture to have lower molecular weight increases the urethane bonds and hence increases the hydrogen bonding. Using two polyols in the system causes polarity, micro phase segmentation and different hydrogen bonding moieties hence increases the self-healing efficiency due to supramolecular forces.

The mechanical properties are tested with stress-strain test and used to characterize the healing-ability by performing the test to uncut and after cut films. The dumbbell shaped film is cut in the middle and the two cut surfaces are put in contact with each other with no pressure applied, reconnection is observed immediately. The mechanical properties are fully restored after waiting for 3 hours at room temperature and self-healing is confirmed with stress-strain test results. An additional advantage of this invention is that the material is able to heal from the same location repetitively. The material can achieve multiple internal repairs through the breaking and recombination of thiourethane bonds and hydrogen bonds between the urethane and urea linkages.

The self-healing poly(thiourethane-urethane) urea dispersion can also be defined by its application to textiles. The self-healing ability of the said coating is tested by scratching the coated fabric and observing the disappearance of scratch under microscope. The results indicate that the completion of healing takes 3 hours under room temperature and seconds when the fabric is ironed where the iron temperature is between 150-180 °C.

### Examples

The present invention is further illustrated through examples and comparative examples that demonstrate the preparation method of various embodiments of the polyurethane dispersion. The versatility of the invention is also demonstrated by applying the coating to various surfaces such as textile fabric, metal sheet, wood panel, and plastic.

To evaluate the self-healing properties of the coating, a scratch was made on the surface of the fabric using a razor blade, and the coating was left to stand at room temperature for 3 hours. It was observed that the scratch had disappeared, indicating the self-healing ability of the coating. To quantitatively confirm the self-healing ability, the mechanical properties of dumbbell-shaped cured films were tested with a stress-strain test. The tensile strength and elongation at break values of the films before and after the cut were compared.

For the purpose of illustrating the present invention, three formulations are provided as examples, but those skilled in the art can modify the formulations by adjusting the polyols, polyol ratios, and chain extenders, among other variables. All quantities given in "parts" and "percents" are to be understood as weight. The self-healing polymer network of the invention can also be defined by its preparation process. Thus, the self-healing material obtainable by the process of the invention is also considered part of the invention.

Compounds used and can be used in the example formulations are abbreviated as below;
- Isophorone Diisocyanate (IPDI)
- Hexamethylene diisocyanate (HDI)
- Polypropylene glycol (PPG)
- Polyethylene glycol (PEG)
- Polytetramethylene ether glycol (PTMEG)
- Polycaprolactone polyol (PCL)
- Polycarbonate polyol (PC)
- Ethylene diamine (EDA)
- 1,4-Butanediame (BDA)
- 1,6-Hexanediame (HDA)
- Ethanolamine (ETA)
- Triethylamine (TEA)
- 1,6-Hexanediol (HDO)
- Trimethylolpropane (TMP)
- 1,4-butanediol (BDO)
- Dithioerythritol (DTE)
- 2,3-Dimercapto-1-propanol (BAL)
- 2-Mercaptoethanol (ME)

### Example 1. Comparative Example 1-Preparation of a Waterborne Polyurethane Dispersion without Thiol and Hydroxyl Functional Chain Extender

In a three-neck round-bottom flask equipped with a stirrer, nitrogen inlet, and a thermometer, 190 parts of polycarbonate polyol (PC) with a molecular weight of 2000 Da were placed under a nitrogen atmosphere. The PC was heated to 70°C, and 10 parts of internal emulsifier and 0.5 parts of suitable catalyst were added with constant stirring. Then, 115 parts of isophorone diisocyanate (IPDI) were added dropwise and reacted at 85 °C until an overall NCO/OH ratio between 2 to 2.7 was achieved, with the preferred NCO/OH ratio of 2.5.

After reaching the theoretical NCO value, 80 parts of polypropylene glycol) (PPG) with a molecular weight of 1000 Da were added to the reaction mixture. The overall NCO/OH ratio for this stage was preferably between 1.7 to 1.9.

The resulting NCO terminated prepolymer was reacted with 8 parts of 1,6-hexanediol (HDO) until the theoretical NCO value was reached. The overall NCO/OH ratio for this step was selected to be within the range of 1.5 to 1.4, with some remaining unreacted NCO groups.

Finally, the NCO terminated prepolymer was neutralized with 8 parts of triethylamine (TEA), followed by the gradual addition of 650 parts of deionized water. The remaining unreacted NCO groups in the prepolymer reacted with water to form urea groups. The dispersion was further chain extended with 8 parts of ethylenediamine (EDA), in which amine groups react with isocyanates to yield urea groups.

### Example 2. Preparation of a Waterborne Polyurethane Dispersion with Thiol and Hydroxyl Functional Chain Extender

Example 2 is produced similarly to Example 1 in the first and second steps. In the third step, instead of using HDO, 8 parts of 2-Mercaptoethanol, a chain extension agent comprising a thiol and hydroxyl functional group, is added and reacted until the theoretical NCO value is reached. The overall NCO/OH ratio for this step is selected to be within the range of 1.5 to 1.4, with some remaining unreacted NCO groups.

Finally, the NCO terminated prepolymer is neutralized with 8 parts of TEA, followed by the gradual addition of 650 parts of deionized water. The remaining unreacted NCO groups in the prepolymer react with water to form urea groups. The dispersion is further chain extended with EDA in which amine groups react with isocyanates to yield urea groups.

### Example 3. Preparation of a Waterborne Polyurethane Dispersion with Thiol and Hydroxyl Functional Chain Extender with Additional Chain Extender

Example 3 is produced similarly to Example 2 in the first step. However, in the second step, 3 parts of 1,4-butanediol (BDO) is added along with 80 parts ofpoly(propylene glycol) (PPG) with a molecular weight of 1000 Da and reacted further. The overall NCO/OH ratio for this step is selected to be between 1.7 to 1.9. The purpose of adding BDO is to improve the mechanical properties of the resulting poly(thiourethane-urethane) urea dispersion.

### Example 4. Comparative Example 2-Preparation of a Self-Healing Waterborne Polyurethane Dispersion with Thiol and Hydroxyl Functional Chain Extender via Using the Same Polyol in the First and Second Steps

Example 4 is a comparative example designed to demonstrate the effect of using different types of polyols on the self-healing properties of the polyurethane dispersion. The method is similar to Example 3, except that the same polyol type is used in the first and second steps.

In the first step, 190 parts ofpoly(propylene glycol) (PPG) with a molecular weight of 2000 Da is used instead of polycarbonate polyol (PC). By using the same type of polyol in both steps, the dispersion's self-healing properties can be compared with Example 3.

The purpose of this comparative example is to highlight the importance of using different types of polyols in the preparation of self-healing polyurethane dispersions. The choice of polyol can significantly impact the dispersion's properties and performance, including its ability to self-heal.

The examples can be adjusted by varying the types and amounts of polyols, isocyanates, chain extenders, catalysts, surfactants, crosslinkers, and additives, to achieve different properties or performance characteristics.

All examples were evaluated for their self-healing ability by cutting the resulting films into two pieces and recombining them. The mechanical properties of the recombined films were then tested using a stress-strain test. The tensile strength and elongation at break values of the films before and after the cut were compared. The results are summarized in the table below, where the values are expressed in MPa (Mega Pascal) for tensile strength and as a percentage for elongation at break. It can be seen that the examples exhibit improved self-healing ability compared to the comparative examples.

In Example 1 (Comparative Example 1), the film did not exhibit self-healing properties and could not be reconnected after being cut. Therefore, no results were obtained for the mechanical properties of the film after being cut. Additionally, as can be seen in Table 1. the Example 4 (Comparative Example 2), exhibits self-healing but not as effective as in Example 3.

This is attributed to the fact that in Example 3, two different types of polyols were used, resulting in stronger hydrogen bonding and improved self-healing properties compared to Example 4, where the same type of polyol was used in both the first and second steps. Finally, the mechanical properties of Example 3 are better than Example 2 due to the use of an additional chain extender, BDO. This results in improved mechanical strength of the final film.

| Sample Names | **Tensile Strength(MPa) Before Cut** | **Tensile Strength (MPa) After Cut** | **Elongation (%) at Break Before Cut** | **Elongation (%) at Break After Cut** |
|---|---|---|---|---|
| Example 1 | 13.8 | Film did not exhibit self-healing | 1100 | Film did not exhibit self-healing |
| Example 2 | 17.65 | 10.2 | 1950 | 750 |
| Example 3 | 24.5 | 23.8 | 1300 | 1200 |
| Example 4 | 13.8 | 5.5 | 650 | 350 |

All examples were coated on a fabric surface and a scratch was made on the surface. The self-healing ability of the coatings was observed under a microscope and recorded in the figures. It was found that the best self-healing ability was observed in Example 3 (Figure-3), while the worst results were observed in Example 1(Figure-1) where no self-healing was observed. The results show that the incorporation of thiol and hydroxyl functional chain extender (Figure-2)) improves the self-healing ability of the polyurethane dispersion.

### Figures

The figures depicts a polyester fabric that has undergone a scratch test. The "before" portion of the figures shows a close-up view of a single scratch on the fabric surface. The scratch is deep enough to be visible to the naked eye. The scratch has been made intentionally to simulate damage that might occur during normal wear and tear of the fabric.

The "after" portion of the figure shows the same area of the polyester fabric, but after it has been left to stand at room temperature for 3 hours.

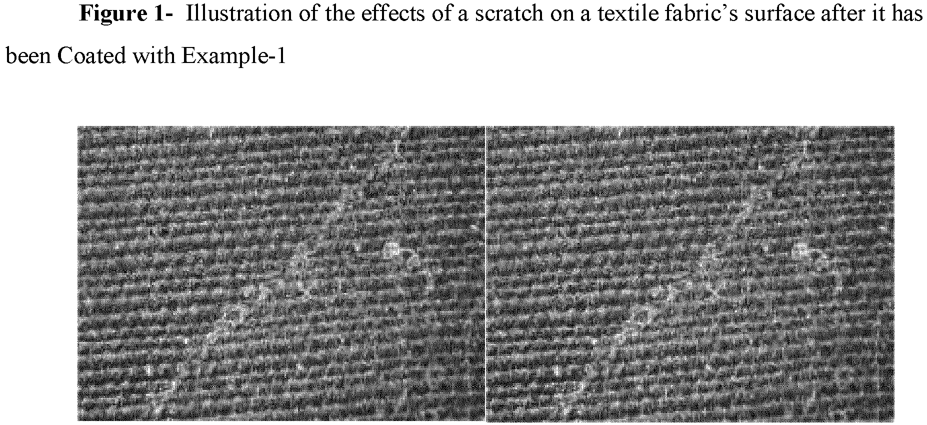

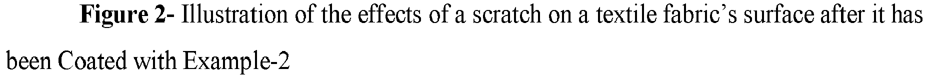

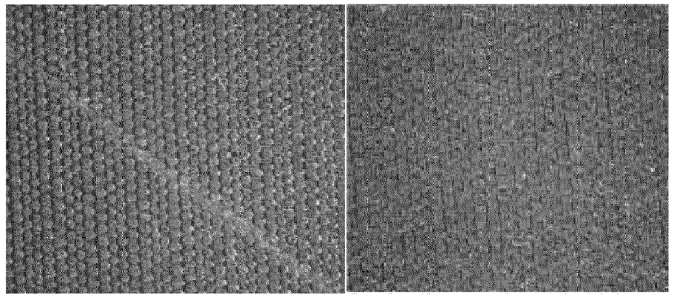

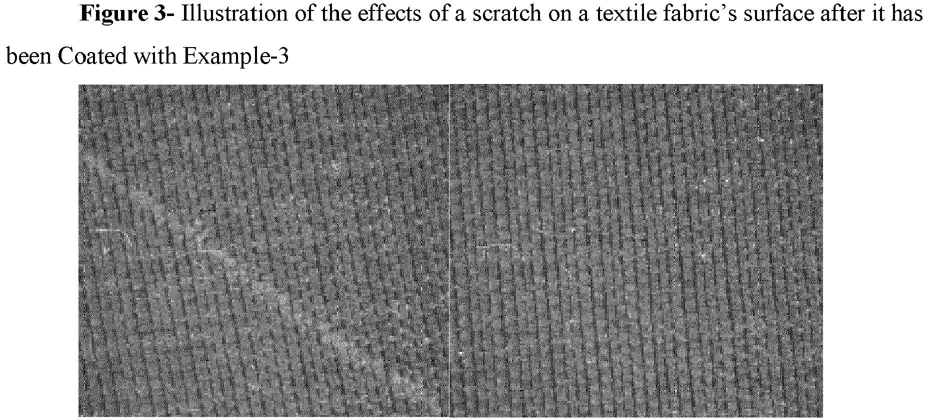

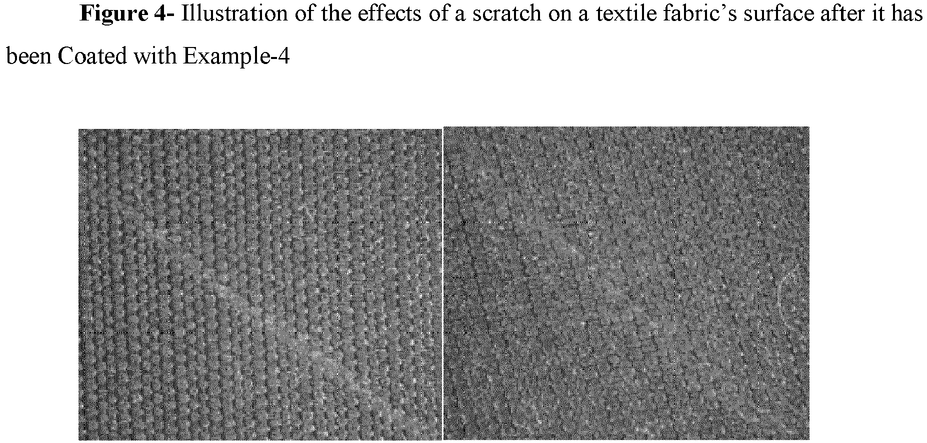

## Claims

1. A self-healing poly(thiourethane-urethane) urea dispersion coating comprising a chain extension agent comprising a hydroxyl and thiol functional group, wherein the use of thiourethane bonds in combination with supramolecular forces, reversible hydrogen bonds from urea and urethane provides enhanced self-healing properties not present in prior art coatings.

2. The self-healing poly(thiourethane-urethane) urea dispersion of claim 1, wherein the ratio of polyols in the mixture can be adjusted to produce coatings with different mechanical properties.

3. The self-healing poly(thiourethane-urethane) urea dispersion of claim 1, wherein the healing process depends on the supramolecular hydrogen bonds between urea and urethane linkages, dynamic thiourethane bonds, and the microphase separation between the hard and soft segments of the poly(thiourethane-urethane) urea structure.

4. The self-healing poly(thiourethane-urethane) urea dispersion of claim 1, wherein the thiourethane bonds possess lower bond dissociation energy, making the polymer easier to be recycled and reprocessed.

5. The self-healing coating of claim 1, wherein two polyols in the system cause polarity, micro phase segmentation, and different hydrogen bonding moieties, hence increasing self-healing efficiency due to supramolecular forces.

6. The method of claim 5, wherein one of the polyols in the mixture has a lower molecular weight, increasing the urethane bonds and hence increasing hydrogen bonding.

7. The self-healing poly(thiourethane-urethane) urea dispersion coating of claim 1, applied to textiles, wherein scratches on the coated fabric disappear under ambient conditions within 3 hours and within seconds when subjected to temperatures between 150-180 °C when ironed.
